# FASCICULE DE BREVET EUROPEEN

(11) **EP 1 857 657 B1**
(45) Date de publication et mention de la délivrance du brevet: **19.09.2012**
(21) Numéro de dépôt: 07290617.5
(22) Date de dépôt: 15.05.2007
(51) Int. Cl.: H02K 5/00, H02K 5/173, H02K 9/22

(54) **Boitier d'accessoires dans un moteur d'avion tel qu'un turboréacteur**
Zubehörgehäuse in einem Flugzeugmotor wie einem Turbinentriebwerk
Turbine accessory drive gearbox assembly in an airplane engine such as a jet engine

(30) Priorité: 19.05.2006 FR 0604488
(43) Date de publication de la demande: 21.11.2007
(73) Titulaire: HISPANO SUIZA, 92707 Colombes Cedex (FR)
(72) Inventeur: Abousleiman, Vincent, 92400 Courbevoie (FR); Linet, Hugues, 92600 Asnieres (FR)
(74) Mandataire: Ramey, Daniel

(56) Documents cités:
- JP-A- 61 145 325
- JP-A- 2000 002 156
- US-A- 2 850 876

## Description

L'invention concerne un boîtier d'accessoires dans un moteur d'avion tel qu'un turboréacteur ou turbopropulseur, ce boîtier comprenant un carter métallique en bout duquel est montée une machine électrique, notamment un alternateur à stator bobiné et à rotor à aimants permanents qui fournit du courant électrique à certains équipements du moteur.

Le document US-A-2,850,876 décrit par exemple un compresseur de turbine à gaz comportant un boîtier porté par un carter et renfermant un démarreur électrique.

Le rotor de la machine électrique est guidé en rotation dans un palier, en général un roulement à rouleaux ou à billes, porté par un couvercle annulaire qui ferme le stator de la machine électrique et sert à la fixation sur le carter du boîtier d'accessoires.

Cette machine électrique est caractérisée par des vitesses de rotation élevées et par de faibles charges, qui provoquent des phénomènes dynamiques pouvant conduire à des avaries de roulement.

Pour éviter ou au moins réduire cet inconvénient, on utilise un couvercle en titane qui a un faible coefficient de dilatation thermique, ce qui permet de limiter les dilatations thermiques différentielles entre la bague extérieure du roulement et la partie du couvercle dans laquelle est montée cette bague.

On évite ainsi de créer un jeu important dans le roulement , ce jeu tendant à augmenter le balourd du rotor et entraîner une usure et une détérioration rapides du roulement.

Le fonctionnement de la machine électrique se traduit par une dissipation thermique importante dans le bobinage du stator, qu'il faut évacuer par conduction dans le carter du boîtier qui est par exemple réalisé en aluminium et est donc un bon conducteur de la chaleur.

Toutefois, le couvercle du stator de la machine électrique contrarie cette évacuation de chaleur car le titane est un mauvais conducteur thermique (son coefficient de conduction thermique est environ vingt fois inférieur à celui de l'aluminium). Cela se traduit par une accumulation de chaleur et par une élévation importante de la température dans la machine électrique, conduisant à un risque de cokéfaction de l'huile contenue dans la machine et par une surchauffe du stator qui perd ses propriétés mécaniques.

La présente invention a notamment pour but d'éviter ces inconvénients.

Elle propose à cet effet un boîtier d'accessoires de moteur d'avion tel que revendiqué dans la revendication 1.

L'invention permet ainsi de conserver les avantages des moyens utilisés dans la technique antérieure, tout en évitant leurs inconvénients. La réalisation d'une pièce support de palier en un matériau à faible coefficient de dilatation thermique, permet d'éviter les dilatations différentielles entre le palier et la pièce support et donc de réduire le balourd et la détérioration du palier. Le montage de cette pièce support sur un couvercle de stator en matériau bon conducteur de la chaleur qui est appliqué sur le carter du boîtier, permet d'évacuer par conduction la chaleur dissipée dans le stator de la machine électrique.

Selon une autre caractéristique de l'invention, la pièce support de palier est fixée dans un orifice du couvercle de stator et centrée dans un orifice correspondant du carter du boîtier.

Avantageusement, la pièce support de palier est fixée par frettage dans l'orifice du couvercle de stator, bien que non revendiqué.

Dans un mode de réalisation de l'invention, la pièce support de palier est une pièce annulaire comportant à sa périphérie extérieure une jupe cylindrique engagée dans des orifices du couvercle de stator et du carter du boîtier et dont la périphérie intérieure comprend des moyens de montage de la bague extérieure du palier du rotor de la machine électrique.

Avantageusement, un rebord annulaire extérieur est formé sur cette pièce support et est serré entre le couvercle de stator et le carter du boîtier, pour assurer la fixation de cette pièce support.

Dans un mode de réalisation particulier de l'invention, cette pièce support est réalisée en titane, tandis que le couvercle de stator de la machine électrique et le carter du boîtier d'accessoires sont en aluminium.

L'invention concerne encore un moteur d'avion, équipé d'un boîtier d'accessoires tel que décrit ci-dessus.

L'invention sera mieux comprise et d'autres caractéristiques, détails et avantages de celle-ci apparaîtront plus clairement à la lecture de la description qui suit, faite à titre d'exemple en référence aux dessins annexés, dans lesquels :
La figure 1 est une vue schématique partielle en coupe axiale d'une machine électrique montée sur un boîtier d'accessoires de la technique antérieure ;
La figure 2 est une vue correspondant à la figure 1 et représente le montage d'une machine électrique sur un boîtier d'accessoires selon l'invention.

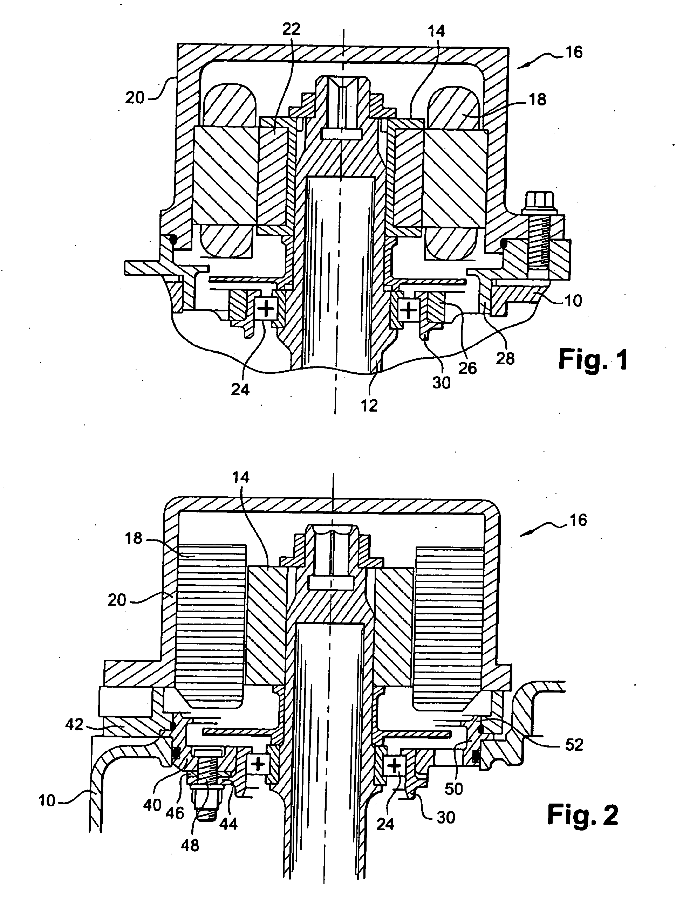

En figure 1, la référence 10 désigne le carter en aluminium d'un boîtier d'accessoires d'un moteur d'avion, tel qu'un turboréacteur par exemple, ce boîtier comprenant un arbre rotatif 12 qui s'étend à l'extérieur du carter 10 et qui porte le rotor 14 d'une machine électrique telle qu'un alternateur 16 destiné à fournir une énergie électrique d'alimentation de certains composants, et par exemple d'un calculateur.

L'alternateur 16 comprend un stator bobiné 18 porté par un corps 20 en un matériau bon conducteur de la chaleur, par exemple en aluminium, et à l'intérieur duquel tourne le rotor 14 qui est équipé d'aimants permanents 22.

L'arbre 12 est guidé en rotation dans un palier tel qu'un roulement 24 à rouleaux ou à billes monté dans l'orifice central d'un couvercle 26 de forme annulaire, qui ferme le corps 20 du stator de l'alternateur et qui comporte une jupe cylindrique 28 engagée dans un orifice correspondant du carter 10 du boîtier d'accessoires.

Le couvercle 26 est réalisé en titane, choisi pour sa légèreté et son faible coefficient de dilatation thermique. Grâce à cette caractéristique du couvercle, les dilatations thermiques différentielles entre le couvercle 26 et la bague extérieure 30 du roulement qui est montée dans l'orifice central du couvercle, sont faibles ou quasi nulles de sorte qu'en fonctionnement, le roulement 24 reste bien centré et guidé dans l'orifice central de couvercle 26.

Toutefois, le coefficient de conduction thermique du titane est relativement très faible par rapport à celui de l'aluminium de sorte que le couvercle 26 s'oppose au transfert dans le carter 10 du boîtier d'accessoires de la chaleur qui est générée dans le stator 18 de l'alternateur en fonctionnement.

Cela peut se traduire par une cokéfaction de l'huile contenue dans le stator et par un échauffement trop important de ce dernier, comme déjà indiqué dans ce qui précède.

La présente invention permet d'éviter cet inconvénient, de façon simple et efficace, en remplaçant le couvercle 26 du stator de l'alternateur par un ensemble de deux pièces, comprenant une pièce 40 de support du palier 24 et une pièce annulaire 42 qui porte la pièce support 40 et sert à la fois de couvercle de fermeture du corps de stator et d'organe de liaison thermique avec le carter 10 du boîtier d'accessoires.

Comme on le voit en figure 2, dans laquelle les éléments déjà représentés en figure 1 sont désignés par les mêmes chiffres de référence, la bague extérieure 30 du palier 24 est montée dans l'orifice central de la pièce support 40 et comporte une collerette annulaire externe 44 appliquée sur la pièce support 40 par l'intermédiaire d'une garniture 46 et fixée à cette pièce support par des boulons 48.

A sa périphérie extérieure, la pièce support 40 comporte une jupe cylindrique 50 au moyen de laquelle elle est centrée dans un orifice du carter 10 du boîtier d'accessoires et est fixée par frettage dans un orifice central de la pièce annulaire 42.

Cette pièce 42 comporte une face inférieure appliquée sur une partie annulaire du carter 10 du boîtier d'accessoires et une face opposée en appui sur l'extrémité du corps 20 du stator de l'alternateur 16, la pièce 42 étant fixée à ce corps par des vis de la même façon que le couvercle 26 est fixé au corps 20 en figure 1.

Des joints toriques d'étanchéité sont montés entre la jupe 50 de la pièce support 40 et le bord de l'orifice du carter 10 dans lequel cette jupe est montée et entre cette jupe et le bord de l'orifice de la pièce annulaire 42. De plus, la jupe 50 est formée avec une collerette annulaire extérieure 52 qui est serrée entre le carter 10 du boîtier d'accessoires et la pièce annulaire 42.

La pièce support 40 est réalisée en un matériau à relativement faible coefficient de dilatation thermique, par exemple en titane, de façon à ce que les dilatations thermiques différentielles entre cette pièce et la bague extérieure 30 du palier soient aussi faibles que possible.

La pièce annulaire 42 est réalisée en un matériau bon conducteur de la chaleur, par exemple en aluminium, ayant une conductivité thermique relativement très supérieure à celle de la pièce support 40, et fait office de pont thermique entre le corps 20 du stator de l'alternateur et du carter 10 du boîtier d'accessoires réalisés tous les deux en aluminium.

Ainsi, l'énergie thermique qui est dégagée dans le stator pendant le fonctionnement de l'alternateur est évacuée par l'intermédiaire de la pièce annulaire 42 et du carter 10 du boîtier d'accessoires et ne s'accumule pas à l'intérieur du stator.

Bien entendu, la pièce 40 de support du palier pourrait être réalisée en un matériau à faible coefficient de dilatation thermique autre que le titane et la pièce annulaire 42 pourrait être réalisée en un matériau bon conducteur de la chaleur autre que l'aluminium, les matériaux utilisés étant de préférence légers.

## Revendications

1. Boîtier d'accessoires de moteur d'avion, comprenant un carter (10) en matériau bon conducteur de la chaleur et un corps sur lequel est monté le stator d'une machine électrique (16) dont le rotor (14) est guidé dans un palier (24) porté par une pièce support (40) en matériau à relativement faible coefficient de dilatation thermique de façon à ce que les dilatations thermiques différentielles entre cette pièce (40) et une bague extérieure (30) du palier (24) soient aussi faibles que possible, **caractérisé en ce que** la pièce support (40) du palier (24) est portée par un couvercle (42) de stator de la machine électrique, ce couvercle étant appliqué sur le carter (10) du boîtier d'accessoires et réalisé en un matériau bon conducteur de la chaleur ayant une conductivité thermique relativement très supérieure à celle de la pièce support (40), pour former un pont thermique entre le corps et le carter (10) du boîtier, la bague extérieure (30) du palier étant fixée par des boulons sur la pièce support (40).

2. Boîtier selon la revendication 1, **caractérisé en ce que** la pièce (40) support de palier est fixée dans un orifice du couvercle (42) du stator et est centrée dans un orifice correspondant du carter (10) du boîtier.

3. Boîtier selon la revendication 1 ou 2, **caractérisé en ce que** la pièce (40) support de palier est une pièce annulaire comportant à sa périphérie extérieure une jupe cylindrique (50) engagée dans des orifices du couvercle (42) du stator et du carter (10) du boîtier et dont la périphérie interne comprend des moyens de montage de la bague extérieure (30) du palier (24).

4. Boîtier selon l'une des revendications précédentes, **caractérisé en ce que** la pièce support (40) comporte un rebord annulaire extérieur (52) serré entre le couvercle (42) du stator et le carter (10) du boîtier.

5. Boîtier selon l'une des revendications précédentes, **caractérisé en ce que** la pièce (40) support de palier est en titane.

6. Boîtier selon l'une des revendications précédentes, **caractérisé en ce que** le couvercle de stator (42) et le carter (10) du boîtier sont en aluminium.

7. Moteur d'avion, équipé d'un boîtier d'accessoires selon l'une des revendications 1 à 6.

## Claims

1. An airplane engine accessory box comprising a casing (10) of a material that is a good conductor of heat and a body having mounted thereon the stator of an electrical machine (16) having a rotor (14) guided in a bearing (24) carried by a support part made (40) of a material having a small coefficient of thermal expansion such that differential thermal expansion between this piece (40) and an outer ring (30) of the bearing (24)is as small as possible, **characterized in that** the support part (40) of the bearing (24) is carried by a stator cover (42) of the stator of the electrical machine, this cover being applied onto the casing (10) of the accessory box and being made of a material that is a good conductor of heat having a thermal conductivity that is relatively much higher than that of the support part (40), in order to form a heat bridge between the body and the casing (10) of the box, the outer ring (30) of the bearing being secured by bolts on the support part (40).

2. A box according to claim 1, **characterized in that** the bearing support part (40) is secured in an orifice of the stator cover (42) and is centered in a corresponding orifice of the casing (10) of the box.

3. A box according to claim 1 or claim 2, **characterized in that** the bearing support part (40) is an annular part having a cylindrical skirt (50) at its outer periphery that is engaged in orifices of the stator cover (42) and of the box casing (10) and that has an inner periphery that includes means for mounting the outer ring (30) of the bearing (24).

4. A box according to any preceding claim, **characterized in that** the support part (40) includes an outer annular rim (52) clamped between the stator cover (42) and the box casing (10).

5. A box according to any preceding claim, **characterized in that** the support part (40) is made of titanium.

6. A box according to any preceding claim, **characterized in that** the stator cover (42) and the casing (10) are made of aluminum.

7. A turbomachine engine comprising an accessory box according to anyone of claims 1 to 6.

## Patentansprüche

1. Zubehörgehänse für das Triebwerk eines Flugzeugs, enthaltend einen Kasten (10) aus gut wärmeleitendem Material und einen Körper, an dem der Stator einer elektrischen Maschine (16) gelagert ist, deren Rotor (14) in einem Lager (24) geführt ist, das von einem Trägerteil (40) aus einem Material mit relativ geringem Wärmeausdehnungskoeffizient getragen wird, so dass die unterschiedlichen Wärmeausdehnungen zwischen diesem Teil (40) und einem Außenring (30) des Lagers (24) so gering wie möglich sind, **dadurch gekennzeichnet, dass** das Trägerteil (40) des Lagers (24) von einem Statordeckel (42) der elektrischen Maschine getragen wird, wobei dieser Deckel auf dem Kasten (10) des Zubehörgehäuses aufliegt und aus einem gut wärmeleitenden Material mit einer Wärmeleitfähigkeit hergestellt ist, die relativ viel höher als die des Trägerteils (40) ist, um eine Wärmebrücke zwischen dem Körper und dem Kasten (10) des Gehäuses zu bilden, wobei der Außenring (30) des Lagers über Bolzen an das Trägerteil (40) befestigt ist.

2. Gehäuse nach Anspruch 1, **dadurch gekennzeichnet, dass** das Trägerteil (40) zum Tragen des Lagers in einer Öffnung des Deckels (42) des Stators befestigt ist und in einer entsprechenden Öffnung des Kastens (10) des Gehäuses zentriert ist.

3. Gehäuse nach Anspruch 1 oder 2, **dadurch gekennzeichnet, dass** das Trägerteil (40) zum Tragen des Lagers ein ringförmiges Teil ist, das an seinem Außenumfang eine Zylinderschürze (50) aufweist, welche in die Öffnungen von dem Deckel (42) des Stators und von dem Kasten (10) des Gehäuses eingreift, und das an seinem Innenumfang Mittel zum Lagern des Außenrings (30) des Lagers (24) aufweist.

4. Gehäuse nach einem der vorangehenden Ansprüche, **dadurch gekennzeichnet, dass** das Trägerteil (40) eine ringförmige Außenrandkante (52) aufweist, die zwischen Deckel (42) des Stators und Kasten (10) des Gehäuses eingeklemmt ist.

5. Gehäuse nach einem der vorangehenden Ansprüche, **dadurch gekennzeichnet, dass** das Trägerteil (40) zum Tragen des Lagers aus Titan besteht.

6. Gehäuse nach einem der vorangehenden Ansprüche, **dadurch gekennzeichnet, dass** der Statordeckel (42) und der Kasten (10) des Gehäuses aus Aluminium bestehen.

7. Triebwerk für Flugzeuge, das mit einem Zubehörgehäuse nach einem der Ansprüche 1 bis 6 ausgestattet ist.
